# EUROPÄISCHE PATENTSCHRIFT

(11) **EP 3 103 665 B1**
(45) Veröffentlichungstag und Bekanntmachung des Hinweises auf die Patenterteilung: **24.07.2019**
(21) Anmeldenummer: 15171258.5
(22) Anmeldetag: 09.06.2015
(51) Int. Cl.: B60J 10/22, B60J 10/70

(54) **PROFILLEISTE, SYSTEM UND VERFAHREN ZUR HERSTELLUNG EINER PROFILLEISTE**
PROFILE STRIP, SYSTEM AND METHOD FOR PRODUCTION OF A PROFILE STRIP
BAGUETTE PROFILÉE, SYSTÈME ET PROCÉDÉ DE FABRICATION D'UNE BAGUETTE PROFILÉE

(43) Veröffentlichungstag der Anmeldung: 14.12.2016
(73) Patentinhaber: Elkamet Kunststofftechnik GmbH, 35216 Biedenkopf (DE)
(72) Erfinder: Ortmüller, Michael, 35232 Dautphetal-herzhausen (DE); Landeck, David, 35037 Marburg (DE)
(74) Vertreter: DREISS Patentanwälte PartG mbB

(56) Entgegenhaltungen:
- DE-A1-102011 056 955
- DE-U1-202014 106 011
- GB-A- 2 219 338

## Beschreibung

Die Erfindung betrifft eine Profilleiste, umfassend einen ersten Verbindungsbereich zur Verbindung mit einem Randbereich einer Windschutzscheibe eines Kraftfahrzeugs und einen zweiten Verbindungsbereich zur Verbindung mit einem an die Windschutzscheibe angrenzenden Bauteil.

Profilleisten der eingangs genannten Art sind beispielsweise bekannt aus der DE 200 08 555 U1, der DE 20 2008 006 986 U1, der DE 20 2008 016 217 U1, der DE 20 2014 106 011 U1 und der DE 10 2011 056 955 B4.

Beispielsweise wird eine aus der DE 200 08 555 U1 bekannte Profilleiste zunächst mit einer Fahrzeugscheibe verbunden, bevor die Fahrzeugscheibe mit angeschlossener Profilleiste an einem Fahrzeug montiert wird. Anschließend wird ein angrenzendes Bauteil in Form eines Abdeckteils montiert, bei welchem es sich beispielsweise um eine Wasserkastenabdeckung handelt, welche mit der Profilleiste verrastet wird. Eine Wasserkastenabdeckung dient zur Abdeckung eines Wasserkastens, der von der Fahrzeugscheibe abfließendes Wasser aufnimmt und kontrolliert in den Motorraum und unter das Fahrzeug ableitet. Der Wasserkasten kann Bestandteil der Fahrzeugkarosserie sein.

Die aus der DE 20 2008 006 986 U1 und der DE 20 2008 016 217 U1 bekannten Profilvarianten ermöglichen es, die zur Montage des Abdeckteils erforderlichen Montagekräfte deutlich zu reduzieren, wodurch auf eine karosserieseitige Abstützung unterhalb der Profilleiste verzichtet werden kann.

Die Verrastung einer Wasserkastenabdeckung mit der Profilleiste erfolgt üblicherweise jeweils über die gesamte Profillänge, d.h. im Wesentlichen über die ganze Breite der Fahrzeugscheibe. Der Kantenverlauf moderner Fahrzeugscheiben ist über die Fahrzeugbreite durch mehrere, ineinander übergehende Radien charakterisiert, wobei die Scheibe in manchen Fällen bezüglich der vertikalen Fahrzeugmittelebene nicht symmetrisch ist. Die Profilleisten werden der Scheibenkontur daher üblicherweise durch Vorbiegen exakt angepasst, bevor sie an der Scheibenkante angebracht werden. Für eine präzise und möglichst über die ganze Scheibenbreite spaltfreie Montage der Wasserkastenabdeckung an der Profilleiste ist es erforderlich, die Wasserkastenabdeckung während der Montage relativ exakt zu der Profilleiste auszurichten. Häufig werden dazu an der Profilleiste wie auch an der Abdeckung optische Mittenmarkierungen angebracht, die zwar eine gewisse Orientierung gestatten, eine Fehlausrichtung während der Montage jedoch nicht verhindern.

Damit die Montage einer Profilleiste einfach und zuverlässig gelingt, muss zudem der zweite Verbindungsbereich, der einen Rastbereich zur Aufnahme eines Rastkörpers des Abdeckteils aufweist, relativ enge Toleranzen einhalten. Damit diese engen Toleranzen auch nach dem Vorbiegen des Profils und nach Lagerung und Transport der Scheiben, die in der Regel aufrecht auf der Profilleiste stehend erfolgen, erreicht werden kann, wird in der WO 2006/002891 A1 und der EP 2 253 556 A1 vorgeschlagen, in den Rastbereich ein Transportschutzprofil (oft auch als "Keder" bezeichnet) einzusetzen. Solche Transportschutzprofile werden als separate Bauteile bereitgestellt und müssen vor der Montage des Abdeckteils an der Profilleiste aus dem Rastbereich der Profilleiste entfernt und dann entsorgt werden.

Um den Aufwand für Entfernung und Entsorgung des Keders zu vermeiden, wird in der DE 10 2011 056 955 B4 eine Profilleiste vorgeschlagen, welche ein zwischen verschiedenen Funktionsstellungen bewegbares Funktionselement umfasst. In einer ersten Funktionsstellung verschließt das Funktionselement eine Rastausnehmung und schützt diese gegen Verformung und Verschmutzung; in einer zweiten Funktionsstellung gibt das Funktionselement die Rastausnehmung frei, sodass ein Rastelement der Wasserkastenabdeckung mit der Rastausnehmung verrastet werden kann.

Aus der GB 2 219 338 A ist eine Dichtungsprofilanordnung zur Umfassung eines oberen Randes und von zwei Seitenrändern einer Windschutzscheibe bekannt, welche aus zwei in Längsrichtung zueinander parallel und miteinander versteckbaren Profilabschnitten besteht.

Hiervon ausgehend liegt der vorliegenden Erfindung die Aufgabe zugrunde, eine gegenüber Transportschäden unempfindliche Profilleiste bereitzustellen, welche eine möglichst einfache Montage des angrenzenden Bauteils an der Profilleiste erlaubt.

Diese Aufgabe wird erfindungsgemäß durch eine Profilleiste mit den Merkmalen des Anspruchs 1 gelöst.

Erfindungsgemäß weist der zweite Verbindungsbereich der Profilleiste unterschiedliche Teilabschnitte auf. Mindestens ein erster Teilabschnitt ermöglicht die Einführung eines Verbindungselements des angrenzenden Bauteils, beispielsweise eines Rastelements einer Wasserkastenabdeckung, in einen Aufnahmebereich, welcher von einem offenen Profil begrenzt ist. Mindestens ein zweiter Teilabschnitt der Länge der Profilleiste weist im Unterschied zu dem ersten Teilabschnitt ein geschlossenes Profil auf, sodass die Einführung eines Verbindungselements des angrenzenden Bauteils in das geschlossene Profil des zweiten Teilabschnitts hinein nicht möglich ist.

Zur Einsparung von Material umschließt das geschlossene Profil des zweiten Teilabschnitts einen Hohlraum. Der zweite Teilabschnitt ist durch einen rinnenförmigen Abschnitt und einen den rinnenförmigen Abschnitt verschließenden Abschnitt gebildet. Hierbei bildet der den rinnenförmigen Abschnitt verschließende Abschnitt einen Quersteg, welcher den rinnenförmigen Abschnitt überbrückt.

Das geschlossene Profil des zweiten Teilabschnitts hat den Vorteil, dass die Profilleiste zumindest auf Höhe des zweiten Teilabschnitts stabilisiert wird. Auf diese Weise kann eine Verformung und/oder eine Beschädigung der Profilleiste insbesondere während eines Transports verhindert werden.

Das geschlossene Profil des zweiten Teilabschnitts ermöglicht den Verzicht auf die Anordnung eines aus dem Stand der Technik bekannten Keders, welcher eine Transportschutzfunktion hat und zur Vorbereitung der Montage der Profilleiste und des angrenzenden Bauteils entfernt werden muss. Die Funktion eines solchen Keders wird erfindungsgemäß ersetzt durch das geschlossene Profil des mindestens einen zweiten Teilabschnitts der Profilleiste. Das geschlossene Profil des zweiten Teilabschnitts ist integraler Bestandteil der Profilleiste, er wird also nicht durch ein zusätzliches Bauteil bereitgestellt. Im Übergangsbereich zwischen einem ersten Teilabschnitt und einem zweiten Teilabschnitt ermöglicht es eine Berandung des zweiten Teilabschnitts, einen in Längsrichtung der Profilleiste wirksamen Anschlag zur Positionierung eines Verbindungselements des angrenzenden Bauteils bereitzustellen. Auf diese Weise wird die Anzahl der Freiheitsgrade, mit welchen das angrenzende Bauteil und die Profilleiste miteinander gefügt werden können, reduziert. Somit kann die positionsgenaue Montage des angrenzenden Bauteils vereinfacht werden.

Besonders bevorzugt ist es, dass die Teilabschnitte miteinander einstückig ausgebildet sind. Auf diese Weise kann entlang der gesamten Profilleiste ein stabiler und einfacher Materialverbund geschaffen werden.

Vorzugsweise sind die vorstehend genannten Abschnitte relativ zueinander unbewegbar. Diese Abschnitte bilden also gemeinsam einen formstabilen Verbund, welcher im Rahmen der Verformbarkeit des für die Abschnitte verwendeten Materials zwar geringfügig, insbesondere elastisch, verformbar ist, welcher jedoch nicht, wie aus der DE 10 2011 056 955 A1 bekannt, durch Relativbewegung der Abschnitte in unterschiedliche Funktionsstellungen verbracht werden kann. Mit anderen Worten: Das geschlossene Profil des zweiten Teilabschnitts kann nicht geöffnet werden, ohne hierbei Material des zweiten Teilabschnitts zu entfernen.

Eine besonders bevorzugte Ausführungsform der Erfindung sieht vor, dass das offene Profil des ersten Teilabschnitts einen rinnenförmigen Abschnitt aufweist, welcher vorzugsweise im Querschnitt identisch ist zu einem oder dem rinnenförmigen Abschnitt des zweiten Teilabschnitts. Auf diese Weise ist es möglich, die Querschnitte des ersten Teilabschnitts und des zweiten Teilabschnitts einander anzugleichen, insbesondere hinsichtlich ihres rinnenförmigen Abschnitts zueinander identisch auszubilden. Dies vereinfacht die Herstellung der erfindungsgemäßen Profilleiste.

Um eine lokale Überlastung der Profilleiste während eines Transports zu vermeiden, wird vorgeschlagen, dass eine entlang der Erstreckung der Profilleise gemessene Länge eines zweiten Teilabschnitts mindestens 0,5 cm, vorzugsweise mindestens 2 cm, beträgt. Insbesondere beträgt die Länge eines zweiten Teilabschnitts mindestens 4 cm.

Zur weiteren Verbesserung der Stabilität der Profilleiste wird vorgeschlagen, dass der zweite Verbindungsbereich mindestens zwei zweite Teilabschnitte umfasst, welche sich an voneinander abgewandten Enden eines ersten Teilabschnitts an diesen anschließen. Auf diese Weise können zwei seitliche Anschläge zur Positionierung eines Verbindungselements oder mehrerer Verbindungselemente des angrenzenden Bauteils bereitgestellt werden.

Vorzugsweise ist zumindest ein zweiter Teilabschnitt in Längsrichtung der Profilleiste gesehen im Bereich eines Endes der Profilleiste angeordnet. Auf diese Weise kann ein während des Transports stärker exponierter Bereich der Profilleiste stabilisiert werden. Nach Montage der Profilleiste an der Windschutzscheibe eines Kraftfahrzeugs sind die beiden Enden der Profilleiste im Bereich der beiden unteren Ecken der Windschutzscheibe positioniert.

Ferner ist es bevorzugt, wenn zumindest ein zweiter Teilabschnitt im Bereich einer in Längsrichtung der Profilleiste gesehen zentralen Profilebene angeordnet ist. Auf diese Weise kann, insbesondere bei einem stehenden Transport einer Fahrzeugscheibe, an welcher eine Profilleiste befestigt ist, diese Profilleiste in einem Hauptauflagebereich verstärkt werden.

Bei einer weiteren bevorzugten Ausführungsform der Erfindung ist vorgesehen, dass die Teilabschnitte bezogen auf eine in Längsrichtung der Profilleiste gesehen zentrale Profilebene symmetrisch ausgebildet und/oder symmetrisch angeordnet sind. Dies ermöglicht die Verwendung einer vertikalen Fahrzeugmittelebene als Bezugsebene für die Montage des angrenzenden Bauteils an der Profilleiste.

Zur weiteren Vereinfachung der Montage des angrenzenden Bauteils wird vorgeschlagen, dass der zweite Verbindungsbereich einen trichterförmigen Einführabschnitt aufweist, sodass das angrenzende Bauteil in unterschiedlichen Neigungen mit der Profilleiste gefügt werden kann. Zur weiteren Vereinfachung der Montage ist es möglich, dass der trichterförmige Einführabschnitt in sich verformbare und/oder relativ zueinander verformbare Materialabschnitte aufweist.

Ferner ist es möglich, dass der erste Teilabschnitt einen sich längs des ersten Teilabschnitts erstreckenden Zugang zum Aufnahmebereich aufweist, wobei eine quer zu der Erstreckung der Profilleiste gemessene Weite des Zugangs entlang des ersten Teilabschnitts variiert. Auf diese Weise können durch lokale Verengung des Zugangs zwischen der Profilleiste und dem angrenzenden Bauteil wirkende Verbindungskräfte, insbesondere Rastkräfte, erhöht werden. In diesem Zusammenhang ist es bevorzugt, wenn die genannte Weite des Zugangs entlang des ersten Teilabschnitts um mindestens 0,2 mm, vorzugsweise um mindestens 0,4 mm, insbesondere bevorzugt um 0,6 mm variiert.

Für eine weitere Vereinfachung der Montage ist es bevorzugt, dass der zweite Verbindungsbereich an seiner in Gebrauchslage der Profilleiste unteren Seite Abstützelemente aufweist, welche auch als Puffer bezeichnet werden können und vorzugsweise aus einem weichen Material bestehen. Die Abstützelemente können sich entlang der Profilleiste nur abschnittsweise erstrecken, insbesondere abgestimmt auf die Anordnung und Positionierung von Karosseriebauteilen, oder aber auch entlang der gesamten Profileiste.

Ferner ist es möglich, dass die Materialabschnitte des zweiten Verbindungsbereichs in Erstreckungsrichtung der Profilleiste gesehen variierende Wandstärken aufweisen. Beispielsweise kann es vorteilhaft sein, Wandstärken im Bereich von Anbauteilen, beispielsweise Wischerachsendurchführungen, zu reduzieren.

Eine weitere Möglichkeit besteht darin, in Erstreckungsrichtung der Profilleiste gesehen Wandstärken im Bereich des ersten Teilabschnitts zu variieren, insbesondere im Bereich des rinnenförmigen Abschnitts, wobei niedrigere Wandstärken mit geringeren Verbindungskräften zum angrenzenden Bauteil einhergehen und höhere Wandstärken mit einer Erhöhung der Verbindungskräfte.

Für den Fall, dass die Profilleiste einen zwischen dem angrenzenden Bauteil und dem Rand der Fahrzeugscheibe wirksamen Dichtbereich aufweist, kann es bevorzugt sein, in Erstreckungsrichtung der Profilleiste gesehen die Höhe dieses Dichtbereichs, welche senkrecht zur Fahrzeugaußenhaut gemessen wird, zu variieren. Auf diese Weise können lokal unterschiedliche Einbauhöhen der Profilleiste kompensiert werden. Solche variierenden Einbauhöhen können sich beispielsweise im Bereich von Kabeldurchführungen, insbesondere für eine Fahrzeugscheibenheizung, ergeben.

Alternativ oder zusätzlich hierzu ist es möglich, entlang der Erstreckung der Profilleiste gesehen Wandstärken des ersten Verbindungsbereichs zu variieren, beispielsweise um einen lokal begrenzten Bauraum zur Durchführung von Kabeln zu schaffen.

Der vorliegenden Erfindung liegt die weitere Aufgabe zugrunde, ein System mit einer vorstehend beschriebenen Profilleiste und mit einem angrenzenden Bauteil bereitzustellen, welches eine möglichst einfache Montage des angrenzenden Bauteils an der Profilleiste erlaubt.

Diese Aufgabe wird bei einem System der vorstehend genannten Art erfindungsgemäß dadurch gelöst, dass eine entlang der Erstreckung der Profilleiste gemessene Einführlänge eines Verbindungselements oder einer Gruppe von Verbindungselementen des angrenzenden Bauteils kleiner oder gleich einer entlang der Erstreckung der Profilleiste gemessenen Aufnahmelänge des Aufnahmebereichs eines ersten Teilabschnitts ist.

Das erfindungsgemäße System ermöglicht es, das Verbindungselement eines angrenzenden Bauteils in den Aufnahmebereich eines ersten Teilabschnitts der Profilleiste einzuführen und in Erstreckungsrichtung der Profilleiste gesehen zu positionieren. Hierbei liegt eine seitliche Berandung des Verbindungselements an einer Begrenzung des zweiten Teilabschnitts der Profilleiste an. Diese Begrenzung weist in Richtung auf den ersten Teilabschnitt, in welchem das Verbindungselement aufgenommen ist.

Für den Fall, dass die Einführlänge eines Verbindungselements oder einer Gruppe von Verbindungselementen gleich der Aufnahmelänge des Aufnahmebereichs ist, kann nicht nur ein in einer Richtung wirkender Anschlag bereitgestellt werden, sondern eine gegenseitig wirkende Zentrierung, welche eine Zwangspositionierung des angrenzenden Bauteils in Erstreckungsrichtung der Profilleiste gesehen an der Profilleiste ermöglicht.

Eine bevorzugte Ausgestaltung des erfindungsgemäßen Systems sieht vor, dass das angrenzende Bauteil mindestens zwei voneinander separate Verbindungselemente aufweist, welche in Aufnahmebereiche unterschiedlicher erster Teilabschnitte des zweiten Verbindungsbereichs einführbar oder eingeführt sind. Dies ermöglicht eine über die Erstreckung der Profilleiste hinweg gleichförmige und zuverlässige Befestigung des angrenzenden Bauteils an der Profilleiste.

Der vorliegenden Erfindung liegt die weitere Aufgabe zugrunde, Verfahren zur Herstellung einer vorstehend beschriebenen Profilleiste anzugeben.

Gemäß einem ersten erfindungsgemäßen Verfahren wird die Profilleiste extrudiert, wobei eine Extrusionsdüse verwendet wird, deren Querschnitt zur unmittelbar aufeinander folgenden, einstückigen Herstellung der unterschiedlichen Teilabschnitte des zweiten Verbindungsbereichs der Profilleiste variiert wird.

Die Extrusion der Profilleiste ermöglicht es, aufeinander folgende unterschiedliche Teilabschnitte des zweiten Verbindungsbereichs in einem kontinuierlichen Prozess herzustellen. Dabei variiert der Querschnitt der Extrusionsdüse so, dass aufeinander folgend ohne Unterbrechung eines Materialflusses erste Teilabschnitte mit offenem Profil und zweite Teilabschnitte mit geschlossenem Profil hergestellt werden.

Das Extrusionsverfahren ist auch im Hinblick auf eine entlang der Erstreckung der Profilleiste gesehen lokale Variation der Abmessungen unterschiedlicher Abschnitte der Profilleiste vorteilhaft, wie vorstehend unter Bezugnahme auf die erfindungsgemäße Profilleiste beschrieben.

Gemäß einem weiteren erfindungsgemäßen Verfahren wird zunächst ein Profilstrang hergestellt, dessen zweiter Verbindungsbereich entlang seiner gesamten Länge ein geschlossenes Profil aufweist, wobei anschließend entlang zumindest eines ersten Teils der Länge des Profilstrangs Material des geschlossenen Profils entfernt wird, sodass in diesem ersten Teil der Länge des Profilstrangs ein offenes Profil entsteht, welches die Einführung eines Verbindungselements eines angrenzenden Bauteils in einen von dem offenen Profil begrenzten Aufnahmebereich ermöglicht, und sodass in zumindest einem zweiten Teil der Länge des Profilstrangs ein geschlossenes Profil verbleibt, welches die Einführung des Verbindungselements in das geschlossene Profil hinein verhindert.

Das vorstehend genannte Verfahren hat den Vorteil, dass es nicht erforderlich ist, den Querschnitt der Extrusionsdüse zu variieren. Im Rahmen des vorstehenden Verfahrens wird zunächst ein Profilstrang hergestellt, dessen zweiter Verbindungsbereich entlang seiner gesamten Länge ein geschlossenes Profil aufweist. Ausgehend von einem solchen Profilstrang wird entlang eines Teils der Länge des Profilstrangs Material entfernt, sodass in diesem Bereich das geschlossene Profil geöffnet wird und ein Bereich im Sinne eines vorstehend beschriebenen ersten Teilabschnitts entsteht, welcher die Einführung einer Verbindungselements eines angrenzenden Bauteils in einen von dem offenen Profil begrenzten Aufnahmebereich ermöglicht.

Da nur ein Teil der Länge des Profilstrangs bearbeitet wird, verbleibt in zumindest einem zweiten Teil der Länge des Profilstrangs, welcher einem vorstehend beschriebenen zweiten Teilabschnitt entspricht, ein geschlossenes Profil, welches die Einführung des Verbindungselements in das geschlossene Profil hinein verhindert.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt
- Fig. 1: eine Draufsicht einer Ausführungsform einer Baugruppe mit einem System, welches eine Profilleiste und eine angrenzendes Bauteil umfasst;
- Fig. 2: einen Querschnitt der Profilleiste auf Höhe einer in Fig. 1 mit II bezeichneten Schnittebene;
- Fig. 3: einen Querschnitt der Profilleiste auf Höhe einer in Fig. 1 mit III bezeichneten Schnittebene;
- Fig. 4a: eine perspektivische Unteransicht eines Randbereichs des Systems gemäß Fig. 1;
- Fig. 4b: eine perspektivische Draufsicht des Randbereichs des Systems gemäß Fig. 1;
- Fig. 5: eine Seitenansicht der Profilleiste mit vergleichender Gegenüberstellung von drei verschiedenen Ausrichtungen des angrenzenden Bauteils bei Befestigung an der Profilleiste;
- Fig. 6: eine Draufsicht einer weiteren Ausführungsform einer Baugruppe, umfassend eine Profilleiste und ein angrenzendes Bauteil;
- Fig. 7: einen Querschnitt der Profilleiste auf Höhe einer in Fig. 6 mit VII bezeichneten Schnittebene;
- Fig. 8: einen Querschnitt der Profilleiste auf Höhe einer in Fig. 6 mit VIII bezeichneten Schnittebene;
- Fig. 9: einen Querschnitt einer weiteren Ausführungsform einer Profilleiste;
- Fig. 10: einen Querschnitt einer weiteren Ausführungsform einer Profilleiste;
- Fig. 11: einen Querschnitt einer weiteren Ausführungsform einer Profilleiste; und
- Fig. 12: einen Querschnitt einer weiteren Ausführungsform einer Profilleiste.

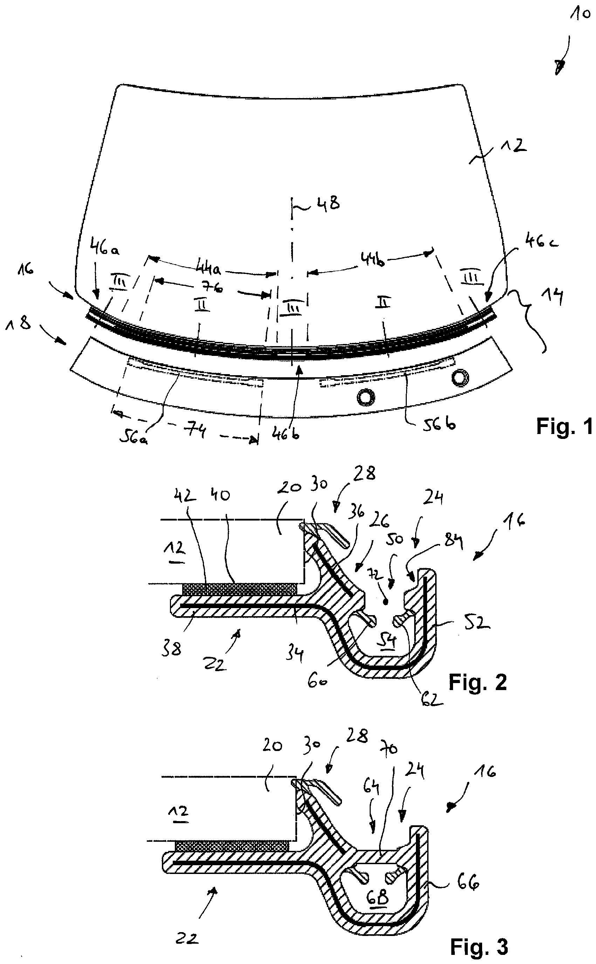

Eine Ausführungsform einer Baugruppe ist in Figur 1 dargestellt und insgesamt mit dem Bezugszeichen 10 bezeichnet. Die Baugruppe 10 umfasst eine Windschutzscheibe 12 eines Kraftfahrzeugs und ein nachstehend beschriebenes System 14.

Das System 14 umfasst eine Profilleiste 16 sowie ein an die Windschutzscheibe angrenzendes Bauteil 18, bei welchem es sich insbesondere um eine Wasserkastenabdeckung handeln kann.

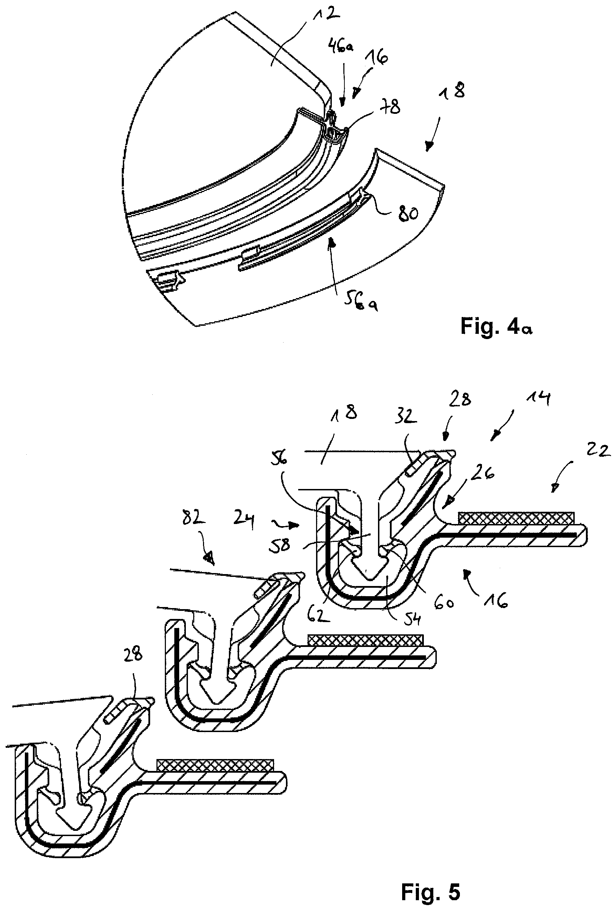

Die Profilleiste 16 wird mit einem in Gebrauchslage der Windschutzscheibe 12 unteren Randbereich 20 der Windschutzscheibe verbunden. Hierfür weist die Profilleiste 16 einen ersten Verbindungsbereich 22 auf (vgl. Figur 2). Zur Verbindung mit dem angrenzenden Bauteil 18 weist die Profilleiste 16 einen zweiten Verbindungsbereich 24 auf (vgl. Figuren 2 und 5).

Die Verbindungsbereiche 22 und 24 sind über einen Zwischenbereich 26 miteinander verbunden. Der Zwischenbereich 26 trägt eine sich entlang der Profilleiste 16 erstreckende Dichtlippe 28, welche einenends dichtend an einer Unterkante 30 der Windschutzscheibe 12 anliegt (vgl. Figuren 2 und 3) und anderenends dichtend an einer Gegenfläche 32 des angrenzenden Bauteils 18 (vgl. Figur 5).

Die Bereiche 22, 24 und 26 der Profilleiste 16 sind miteinander einstückig ausgebildet und insbesondere durch Extrudieren hergestellt. Die Dichtlippe 28 ist vorzugsweise aus einem weicheren Material hergestellt als die Bereiche 22, 24 und 26, beispielsweise aus einem thermoplastischen Elastomer (TPE). Insbesondere ist die Dichtlippe gemeinsam mit den Bereichen 22, 24 und 26 durch Koextrusion hergestellt.

Vorzugsweise sind die Bereiche 22, 24 und 26 aus einem Kunststoffmaterial, beispielsweise aus Poly(vinylchlorid) (PVC), aus einem Blend aus Poly(vinylchlorid) und Poly(acrylnitril-butadien-styrol) (PVC/ABS) oder aus Poly(propylen) (PP) hergestellt.

Zur weiteren Erhöhung der Stabilität der Profilleiste 16 ist es bevorzugt, wenn Verstärkungselemente, insbesondere aus Metall, vorgesehen sind, welche in zumindest einen der Bereiche 22, 24, 26 eingebettet sind. Beispielsweise ist ein erstes Verstärkungselement 34 vorgesehen, welches sich ausgehend von dem ersten Verbindungsbereich 22 über den Zwischenbereich 26 bis hin zu dem zweiten Verbindungsbereich 24 erstreckt. Ferner ist beispielsweise ein zweites Verstärkungselement 36 vorgesehen, welches ausschließlich den Zwischenabschnitt 26 verstärkt.

Der erste Verbindungsbereich 22 umfasst einen stegförmigen Abschnitt 38, welcher sich parallel zu einer Unterseite 40 der Windschutzscheibe 12 erstreckt. Zur Verbindung des Abschnitts 38 mit der Windschutzscheibe 12 ist eine Klebeschicht 42 vorgesehen.

Der zweite Verbindungsbereich 24 weist entlang der Länge der Profilleiste 16 gesehen unterschiedliche Teilabschnitte auf. Hierbei sind in Figur 1 erste Teilabschnitte mit den Bezugszeichen 44a und 44b bezeichnet; hiervon sich unterscheidende zweite Teilabschnitte mit den Bezugszeichen 46a, 46b, 46c.

Die ersten Teilabschnitte 44a, 44b unterscheiden sich von den zweiten Teilabschnitten 46a, 46b, 46c dadurch, dass der zweite Verbindungsbereich 24 auf Höhe der unterschiedlichen Teilabschnitte unterschiedliche Querschnitte aufweist. Auf Höhe der ersten Teilabschnitte 44a, 44b weist die Profilleiste 16 einen Querschnitt gemäß Figur 2 auf; auf Höhe der zweiten Teilabschnitte 46a, 46b, 46c einen Querschnitt gemäß Figur 3.

Alle genannten Teilabschnitte 44a bis 46c sind bezogen auf eine zentrale Profilebene 48 symmetrisch. Dies bedeutet, dass die ersten Teilabschnitte 44a und 44b und die Teilabschnitte 46a und 46c jeweils identisch lang sind und jeweils denselben Abstand zur zentralen Profilebene 48 aufweisen.

Auf Höhe eines ersten Teilabschnitts 44a, 44b weist der zweite Verbindungsbereich 24 ein offenes Profil 50 auf (vgl. Figur 2). Das offene Profil 50 ist durch einen rinnenförmigen Abschnitt 52 gebildet, welcher im Querschnitt U-förmig ist oder eine den Buchstaben "U" oder "V" angenäherte Form aufweist. Der rinnenförmige Abschnitt 52 begrenzt einen Aufnahmebereich 54, in welchen hinein ein Verbindungselement 56, insbesondere in Form eines Rastelements 58, einführbar ist (vgl. Figur 5).

Zur Verrastung mit einem Rastelement 58 weist der zweite Verbindungsbereich 24 mindestens eine, vorzugsweise zwei einander gegenüberliegend angeordnete Rastlippen 60, 62 auf. Es ist möglich, dass die mindestens eine Rastlippe 60, 62 aus einem weicheren Material hergestellt ist als die Bereiche 22, 24, 26 der Profilleiste 16. Die mindestens eine Rastlippe 60 ist vorzugsweise als integraler Bestandteil der Profilleiste 16 durch Koextrusion hergestellt.

Auf Höhe eines zweiten Teilabschnitts 46a, 46b, 46c weist der zweite Verbindungsbereich 24 im Unterschied zu dem offenen Profil 50 der ersten Teilabschnitte 44a, 44b ein geschlossenes Profil 64 auf (vgl. Figur 3).

Das geschlossene Profil 64 kann abweichend von der zeichnerischen Darstellung vollständig massiv ausgebildet sein. Bevorzugt ist es jedoch, dass das geschlossene Profil 64 ein Hohlprofil ist, welches einen Hohlraum 68 umschließt. Der Hohlraum 68 ist durch den rinnenförmigen Abschnitt 66 und durch einen den rinnenförmigen Abschnitt 66 verschließenden Abschnitt 70 gebildet. Der Abschnitt 70 bildet einen Quersteg, welcher im Unterschied zu einem offenen Zugang 72 (vgl. Figur 2) die Einführung eines Verbindungselements 56 des angrenzenden Bauteils in das geschlossene Profil 64 hinein verhindert.

Vorzugsweise weist das angrenzende Bauteil 18 eine Mehrzahl von Verbindungselementen 56 auf, beispielsweise zwei Verbindungselemente 56a, 56b (vgl. Figur 1). Die Verbindungselemente 56a, 56b erstrecken sich parallel zu der Profilleiste 16. Die Verbindungselemente 56a, 56b weisen eine Länge auf, welche nachfolgend als Einführlänge 74 bezeichnet wird. Die Einführlänge 74 ist kleiner oder gleich einer Aufnahmelänge 76 eines ersten Teilabschnitts 44a, 44b.

Die Aufnahmelänge 76 eines ersten Teilabschnitts 44a, 44b kann gleich der Länge eines ersten Teilabschnitts 44a, 44b sein oder kleiner als die Länge eines ersten Teilabschnitts 44a, 44b. Letzteres kann beispielsweise dadurch realisiert sein, dass der Zugang 72 lediglich auf Höhe der Aufnahmelänge 76 breit genug ist, um den Durchtritt eines Verbindungselements 56 zu ermöglichen. Für den Fall, dass ein Querschnittswechsel zwischen einem ersten Teilabschnitt 44a und einem angrenzenden zweiten Teilabschnitt 46a, 46b praktisch übergangslos erfolgt, ist die Aufnahmelänge 76 gleich der Länge des ersten Teilabschnitts 44a.

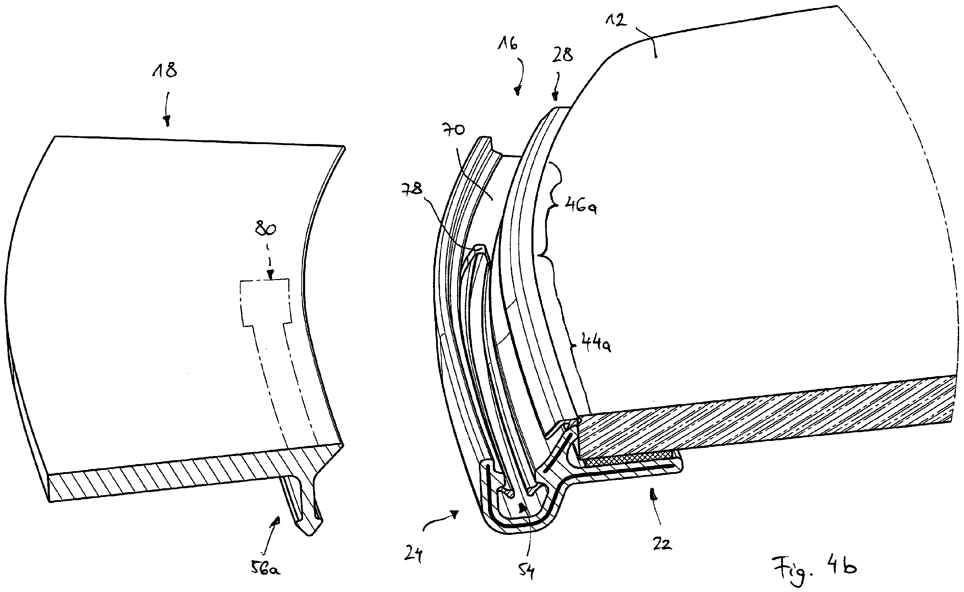

Die einem ersten Teilabschnitt 44a, 44b zugewandten Begrenzungen 78 eines sich an einen ersten Teilabschnitt 44a, 44b anschließenden zweiten Teilabschnitts 46a, 46b, 46c können als Anlage für eine seitliche Begrenzungsfläche 80 eines Verbindungselements 56 (vgl. Figuren 4a und 4b) genutzt werden. Dies erleichtert die Positionierung des angrenzenden Bauteils 18 in Längsrichtung der Profilleiste 16 gesehen.

Zur Vereinfachung der Einführung der Verbindungselemente 56 des angrenzenden Bauteils 18 in den Aufnahmebereich 54 hinein ist es bevorzugt, wenn die Profilleiste 16 einen trichterförmigen Einführbereich 82 aufweist. Der Abschnitt 82 ist durch eine nach fahrzeugaußen gewandte Fläche des Zwischenbereichs 26 sowie durch einen freien Endbereich 84 des rinnenförmigen Abschnitts 52 gebildet (vgl. Figur 2). Der trichterförmige Bereich 82 ermöglicht es, das angrenzende Bauteil 18 im Zuge der Montage an der Profileiste 16 mit unterschiedlichen Neigungen orientieren zu können, beispielsweise in einem zu steilen Winkel (vgl. Figur 5 Mitte) oder in einem zu flachen Winkel (vgl. Figur 5 links unten). Es ist also nicht erforderlich, das Abdeckteil bereits bei der Montage exakt passend auszurichten (vgl. Figur 5 rechts oben).

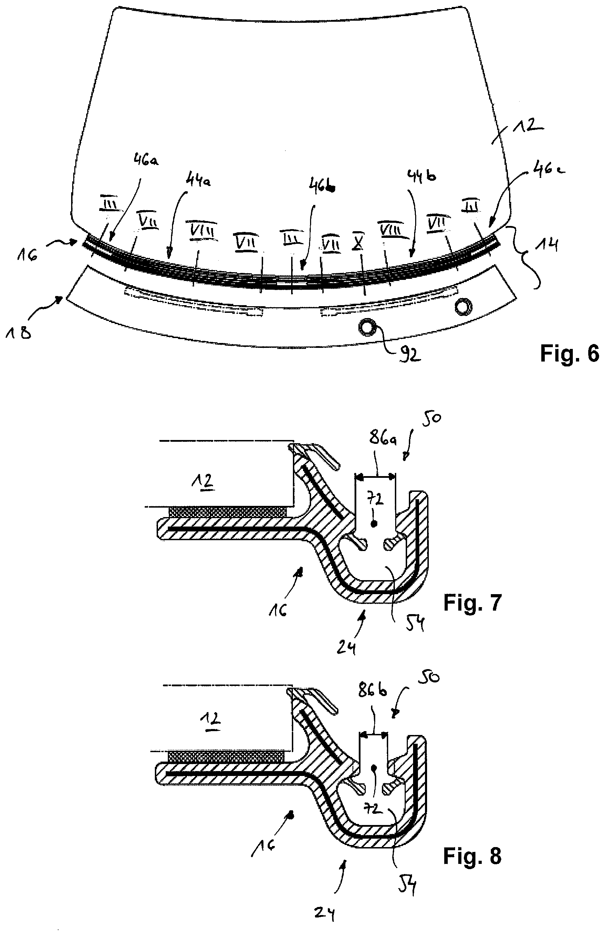

Weitere vorteilhafte Ausführungsformen werden im Folgenden unter Bezugnahme auf die Figuren 6 bis 12 beschrieben.

Es ist möglich, dass die Weite eines Zugangs 72 des offenen Profils 50 eines ersten Teilabschnitts 44a entlang des Verlaufs eines ersten Teilabschnitts 44a, 44b variiert. Beispielsweise kann eine Weite 86a eines Zugangs 72 auf Höhe eines Endbereichs eines ersten Teilabschnitts 44a, 44b größer sein (vgl. Figur 7) als in einem mittleren Bereich, dessen Zugang 72 eine Weite 86b aufweist, welche kleiner ist (vgl. Figur 8). Durch die Variation der Weite 86a, 86b eines Zugangs 72 kann die Rastkraft, mit welcher ein Rastelement 58 mit dem zweiten Verbindungsbereich 54 verbunden ist, lokal variiert werden. Die Variation der Weite 86a, 86b kann zusätzlich oder alternativ hierzu auch dazu verwendet werden, die Aufnahmelänge 76 eines ersten Teilabschnitts 44a, 44b zu beeinflussen.

Nachfolgend werden weitere Möglichkeiten beschrieben, die Querschnittsgeometrie einer Profilleiste 16 entlang deren Länge gesehen zu variieren:
Beispielsweise ist es möglich, an der Unterseite des rinnenförmigen Abschnitts 52 des zweiten Verbindungsbereichs 24 einen Pufferabschnitt 88 vorzusehen, welcher dazu dient, den zweiten Verbindungsbereich auf einem Karosseriebauteil 90 abstützen zu können.

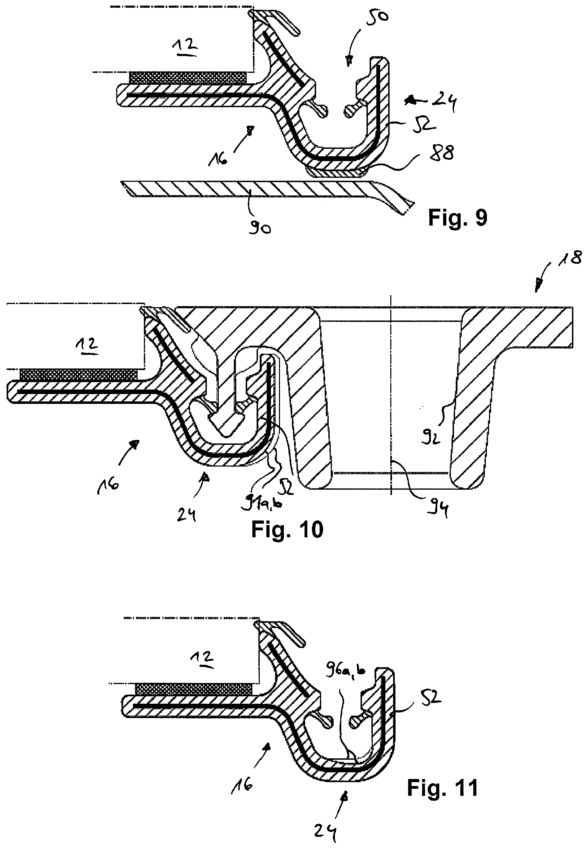

Ferner ist es möglich, Wandstärken eines rinnenförmigen Abschnitts 52 des zweiten Verbindungsbereichs 24 zu variieren. Beispielsweise kann es vorteilhaft sein, eine Seitenwand des rinnenförmigen Abschnitts 52 lokal zu verschlanken, wie dies anhand von Außenkonturen 91a, 91b in Figur 10 dargestellt ist. Diese Verschlankung dient dazu, Bauraum für die am angrenzenden Bauteil 18 vorgesehene Durchtrittsöffnung 92 einer Wischerachse 94 zu schaffen (vgl. Figuren 6 und 10).

In entsprechender Weise ist es möglich, einen Bodenabschnitt des rinnenförmigen Abschnitts 52 entlang der Länge der Profilleiste 16 gesehen mit unterschiedlichen Wandstärken zu versehen, wie dies in Figur 11 mit Bezugszeichen 96a und 96b angedeutet ist.

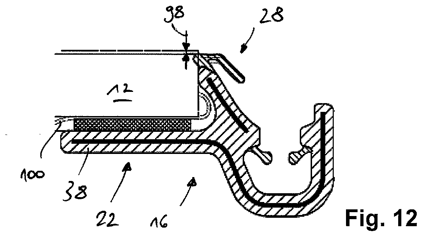

Es ist auch möglich, die Bauhöhe der Dichtlippe 28 zu variieren, beispielsweise um ein Maß 98, welches dem Höhenmaß eines Kabels 100 entspricht (vgl. Figur 12). In entsprechender Weise ist es möglich, die Wandstärke des stegförmigen Abschnitts 38 des ersten Verbindungsbereichs 22 zu variieren.

## Patentansprüche

1. Profilleiste (16), umfassend einen ersten Verbindungsbereich (22) zur Verbindung mit einem Randbereich (20) einer Windschutzscheibe (12) eines Kraftfahrzeugs und einen zweiten Verbindungsbereich (24) zur Verbindung mit einem an die Windschutzscheibe (12) angrenzenden Bauteil (18), wobei der zweite Verbindungsbereich (24) entlang zumindest eines ersten Teilabschnitts (44a, 44b) der Länge der Profilleiste (16) ein offenes Profil (50) aufweist, welches die Einführung eines Verbindungselements (56) des angrenzenden Bauteils (18) in einen von dem offenen Profil (50) begrenzten Aufnahmebereich (54) ermöglicht, wobei der zweite Verbindungsbereich (24) entlang zumindest eines zweiten Teilabschnitts (46a, 46b, 46c) der Länge der Profilleiste (16) ein geschlossenes Profil (64) aufweist, welches die Einführung des Verbindungselements (56) in das geschlossene Profil (64) hinein verhindert, **dadurch gekennzeichnet, dass** das geschlossene Profil (64) des zweiten Teilabschnitts (46a, 46b, 46c) durch einen rinnenförmigen Abschnitt (66) und einen den rinnenförmigen Abschnitt verschließenden Abschnitt (70) gebildet ist.

2. Profilleiste (16) nach Anspruch 1, **dadurch gekennzeichnet, dass** die Teilabschnitte (44a, 44b, 46a, 46b, 46c) miteinander einstückig ausgebildet sind.

3. Profilleiste (16) nach einem der voranstehenden Ansprüche, **dadurch gekennzeichnet, dass** die Abschnitte (66, 70) relativ zueinander unbewegbar sind.

4. Profilleiste (16) nach einem der voranstehenden Ansprüche, **dadurch gekennzeichnet, dass** das offene Profil (50) des ersten Teilabschnitts (44a, 44b) einen rinnenförmigen Abschnitt (52) aufweist, welcher vorzugsweise im Querschnitt identisch ist zu einem oder dem rinnenförmigen Abschnitt (66) des zweiten Teilabschnitts (46a, 46b, 46c).

5. Profilleiste (16) nach einem der voranstehenden Ansprüche, **dadurch gekennzeichnet, dass** eine entlang der Erstreckung der Profilleiste (16) gemessene Länge eines zweiten Teilabschnitts (46a, 46b, 46c) mindestens 0,5 cm, vorzugsweise mindestens 2 cm, insbesondere mindestens 4 cm, beträgt.

6. Profilleiste (16) nach einem der voranstehenden Ansprüche, **dadurch gekennzeichnet, dass** der zweite Verbindungsbereich (24) mindestens zwei zweite Teilabschnitte (46a, 46b, 46c) umfasst, welche sich an voneinander abgewandten Enden eines ersten Teilabschnitts (44a, 44b) an diesen anschließen.

7. Profilleiste (16) nach einem der voranstehenden Ansprüche, **dadurch gekennzeichnet, dass** zumindest ein zweiter Teilabschnitt (46a, 46c) in Längsrichtung der Profilleiste (16) gesehen im Bereich eines Endes der Profilleiste (16) angeordnet ist.

8. Profilleiste (16) nach einem der voranstehenden Ansprüche, **dadurch gekennzeichnet, dass** zumindest ein zweiter Teilabschnitt (46b) im Bereich einer in Längsrichtung der Profilleiste (16) gesehen zentralen Profilebene (48) angeordnet ist.

9. Profilleiste (16) nach einem der voranstehenden Ansprüche, **dadurch gekennzeichnet, dass** die Teilabschnitte (44a, 44b, 46a, 46b, 46c) bezogen auf eine in Längsrichtung der Profilleiste (16) gesehen zentrale Profilebene (48) symmetrisch ausgebildet und/oder symmetrisch angeordnet sind.

10. System (14), umfassend eine Profilleiste (16) nach einem der voranstehenden Ansprüche und ein angrenzendes Bauteil (18), wobei eine entlang der Erstreckung der Profilleiste (16) gemessene Einführlänge (74) eines Verbindungselements (56) oder einer Gruppe von Verbindungselementen (56) des angrenzenden Bauteils kleiner oder gleich einer entlang der Erstreckung der Profilleiste (16) gemessenen Aufnahmelänge (76) des Aufnahmebereichs (54) eines ersten Teilabschnitts (44a, 44b) ist.

11. System (14) nach Anspruch 10, **dadurch gekennzeichnet, dass** eine dem ersten Teilabschnitt (44a, 44b) zugewandte Begrenzung (78) eines sich an den ersten Teilabschnitt (44a, 44b) anschließenden zweiten Teilabschnitts (46a, 46b, 46c) eine Anlagefläche zur Anlage einer seitlichen Begrenzungsfläche (80) des Verbindungselements (56) bildet.

12. System (14) nach Anspruch 10 oder 11, **dadurch gekennzeichnet, dass** das angrenzenden Bauteil (18) mindestens zwei voneinander separate Verbindungselemente (56a, 56b) aufweist, welche in Aufnahmebereiche (54) unterschiedlicher erster Teilabschnitte (44a, 44b) des zweiten Verbindungsbereichs (24) einführbar oder eingeführt sind.

13. Verfahren zur Herstellung einer Profilleiste (16) nach einem der Ansprüche 1 bis 9, **dadurch gekennzeichnet, dass** die Profilleiste (16) extrudiert wird, wobei eine Extrusionsdüse verwendet wird, deren Querschnitt zur unmittelbar aufeinander folgenden, einstückigen Herstellung der unterschiedlichen Teilabschnitte (46a, 44a, 46b, 44b, 46c) des zweiten Verbindungsbereichs (24) der Profilleiste (16) variiert wird.

14. Verfahren zur Herstellung einer Profilleiste (16) nach einem der Ansprüche 1 bis 9, **dadurch gekennzeichnet, dass** zunächst ein Profilstrang hergestellt wird, dessen zweiter Verbindungsbereich (24) entlang seiner gesamten Länge ein geschlossenes Profil (64) aufweist, und dass anschließend entlang zumindest eines ersten Teils der Länge des Profilstrangs Material des geschlossenen Profils (64) entfernt wird, sodass in diesem ersten Teil der Länge des Profilstrangs ein offenes Profil (50) entsteht, welches die Einführung eines Verbindungselements (56) eines angrenzenden Bauteils (18) in einen von dem offenen Profil (50) begrenzten Aufnahmebereich (54) ermöglicht, und sodass in zumindest einem zweiten Teil der Länge des Profilstrangs ein geschlossenes Profil (64) verbleibt, welches die Einführung des Verbindungselements (56) in das geschlossene Profil (64) hinein verhindert.

## Claims

1. A profiled strip (16), having a first connecting area (22) for connecting an edge area (20) of the windshield (12) of a motor vehicle, and having a second connecting area (24) for connecting a component (18) adjoining the windshield (12), whereby the second connecting area (24) has an open profile (50) along at least one first partial section (44a, 44b) of the length of the profiled strip (16), said open profile (50) allowing a connecting element (56) of the adjoining component (18) to be inserted into a receiving area (54) delimited by the open profile (50), whereby the second connecting area (24) has a closed profile (64) along at least one second partial section (46a, 46b, 46c) of the length of the profiled strip (16), said closed profile (64) preventing the insertion of the connecting element (56) into the closed profile (64), **characterized in that** the closed profile (64) of the second partial section (46a, 46b, 46c) is formed by a groove-shaped section (66) and by a section (70) that closes off the groove-shaped section.

2. The profiled strip (16) according to claim 1, **characterized in that** the partial sections (44a, 44b, 46a, 46b, 46c) are configured in one piece with each other.

3. The profiled strip (16) according to one of the preceding claims, **characterized in that** the sections (66, 70) are immovable relative to each other.

4. The profiled strip (16) according to one of the preceding claims, **characterized in that** the open profile (50) of the first partial section (44a, 44b) has a groove-shaped section (52) whose cross section is preferably identical to a or the groove-shaped section (66) of the second partial section (46a, 46b, 46c).

5. The profiled strip (16) according to one of the preceding claims, **characterized in that** a length of a second partial section (46a, 46b, 46c) measured along the extension of the profiled strip (16) amounts to at least 0.5 cm, preferably at least 2 cm, especially at least 4 cm.

6. The profiled strip (16) according to one of the preceding claims, **characterized in that** the second connecting area (24) comprises at least two second partial sections (46a, 46b, 46c) that adjoin a first partial section (44a, 44b) at opposite ends thereof.

7. The profiled strip (16) according to one of the preceding claims, **characterized in that** at least one second partial section (46a, 46c) is arranged in the area of an end of the profiled strip (16), as seen in the lengthwise direction of the profiled strip (16).

8. The profiled strip (16) according to one of the preceding claims, **characterized in that** at least one second partial section (46b) is arranged in the area of a central profile plane (48), as seen in the lengthwise direction of the profiled strip (16).

9. The profiled strip (16) according to one of the preceding claims, **characterized in that** the partial sections (44a, 44b, 46a, 46b, 46c) are configured symmetrically and/or arranged symmetrically relative to a central plane (48), as seen in the lengthwise direction of the profiled strip (16).

10. A system (14), comprising a profiled strip (16) according to one of the preceding claims, and an adjoining component (18), whereby an insertion length (74) of a connecting element (56) or of a group of connecting elements (56) of the adjoining component, as measured along the extension of the profiled strip (16), is smaller than or equal to a receiving length (76) of the receiving area (54) of a first partial section (44a, 44b), as measured along the extension of the profiled strip (16).

11. The system (14) according to claim 11, **characterized in that** a delimitation (78) of a second partial section (46a, 46b, 46c) adjoining the first partial section (44a, 44b), said delimitation (78) facing the first partial section (44a, 44b), forms a contact surface for the contact of a lateral delimitation surface (80) of the connecting element (56).

12. The system (14) according to claim 11 or 12, **characterized in that** the adjoining component (18) has at least two connecting elements (56a, 56b) that are separate from each other and that can be or are inserted into receiving areas (54) of different first partial sections (44a, 44b) of the second connecting area (24).

13. A method for the production of a profiled strip (16) according to one of claims 1 to 10, **characterized in that** the profiled strip (16) is extruded, whereby an extrusion die is used whose cross section is varied for purposes of the immediately consecutive production in one piece of the different partial sections (46a, 44a, 46b, 44b, 46c) of the second connecting area (24) of the profiled strip (16).

14. The method for the production of a profiled strip (16) according to one of claims 1 to 10, **characterized in that**, first of all, a profile extrudate is produced whose second connecting area (24) has a closed profile (64) along its entire length, and **in that** material of the closed profile (64) is subsequently removed, along at least one first part of the length of the profile extrudate, so that, in this first part of the length of the profile extrudate, an open profile (50) is formed that allows a connecting element (56) of an adjoining component (18) to be inserted into a receiving area (54) delimited by the open profile (50), and so that, in at least one second part of the length of the profile extrudate, a closed profile (64) remains, which prevents the insertion of the connecting element (56) into the closed profile (64).

## Revendications

1. Baguette profilée (16) comprenant une première zone de liaison (22) destinée à être reliée à une zone de bord (20) d'un pare-brise (12) d'un véhicule automobile ainsi qu'une deuxième zone de liaison (24) destinée à être reliée à un composant (18) adjacent au pare-brise (12), dans laquelle ladite deuxième zone de liaison (24) présente le long d'au moins un premier tronçon (44a, 44b) de la longueur de la baguette profilée (16) un profilé ouvert (50) qui permet l'introduction d'un élément de liaison (56) du composant (18) adjacent dans une zone de réception (54) délimitée par le profilé ouvert (50), dans laquelle la deuxième zone de liaison (24) présente le long d'au moins un deuxième tronçon (46a, 46b, 46c) de la longueur de la baguette profilée (16) un profilé fermé (64) qui empêche l'introduction de l'élément de liaison (56) dans le profilé fermé (64), **caractérisé par le fait que** le profilé fermé (64) du deuxième tronçon (46a, 46b, 46c) est formé par une section (66) en forme de rigole et une section (70) fermant la section en forme de rigole.

2. Baguette profilée (16) selon la revendication 1, **caractérisée par le fait que** les tronçons (44a, 44b, 46a, 46b, 46c) sont réalisés d'un seul tenant les uns avec les autres.

3. Baguette profilée (16) selon l'une quelconque des revendications précédentes, **caractérisée par le fait que** les sections (66, 70) sont immobiles les unes par rapport aux autres.

4. Baguette profilée (16) selon l'une quelconque des revendications précédentes, **caractérisée par le fait que** le profilé ouvert (50) du premier tronçon (44a, 44b) présente une section (52) en forme de rigole qui, de préférence, est identique en section transversale à une ou à la section (66) en forme de rigole du deuxième tronçon (46a, 46b, 46c).

5. Baguette profilée (16) selon l'une quelconque des revendications précédentes, **caractérisée par le fait qu'**une longueur d'un deuxième tronçon (46a, 46b, 46c), mesurée le long de l'extension de la baguette profilée (16), est d'au moins 0,5 cm, de préférence d'au moins 2 cm, en particulier d'au moins 4 cm.

6. Baguette profilée (16) selon l'une quelconque des revendications précédentes, **caractérisée par le fait que** la deuxième zone de liaison (24) comprend au moins deux deuxièmes tronçons (46a, 46b, 46c) qui sont contigus à un premier tronçon (44a, 44b) à des extrémités opposées l'une à l'autre de ce dernier.

7. Baguette profilée (16) selon l'une quelconque des revendications précédentes, **caractérisée par le fait que**, vu dans la direction longitudinale de la baguette profilée (16), au moins un deuxième tronçon (46a, 46c) est disposé au niveau d'une extrémité de la baguette profilée (16).

8. Baguette profilée (16) selon l'une quelconque des revendications précédentes, **caractérisée par le fait qu'**au moins un deuxième tronçon (46b) est disposé au niveau d'un plan de profilé (48) central, vu dans la direction longitudinale de la baguette profilée (16).

9. Baguette profilée (16) selon l'une quelconque des revendications précédentes, **caractérisée par le fait que** les tronçons (44a, 44b, 46a, 46b, 46c) sont réalisés symétriquement et/ou disposés symétriquement par rapport à un plan de profilé (48) central, vu dans la direction longitudinale de la baguette profilée (16).

10. Système (14) comprenant une baguette profilée (16) selon l'une quelconque des revendications précédentes et un composant (18) adjacent, dans lequel une longueur d'introduction (74) d'un élément de liaison (56) ou d'un groupe d'éléments de liaison (56) du composant adjacent, mesurée le long de l'extension de la baguette profilée (16), est inférieure ou égale à une longueur de réception (76) de la zone de réception (54) d'un premier tronçon (44a, 44b), mesurée le long de l'extension de la baguette profilée (16).

11. Système (14) selon la revendication 10, **caractérisé par le fait qu'**une limitation (78) d'un deuxième tronçon (46a, 46b, 46c) contigu au premier tronçon (44a, 44b), laquelle montre vers ledit premier tronçon (44a, 44b), forme une surface d'appui destinée à appuyer une surface de limitation latérale (80) de l'élément de liaison (56).

12. Système (14) selon la revendication 10 ou 11, **caractérisé par le fait que** le composant (18) adjacent présente au moins deux éléments de liaison (56a, 56b) séparés l'un de l'autre qui peuvent être introduits ou sont introduits dans des zones de réception (54) de premier tronçons différents (44a, 44b) de la deuxième zone de liaison (24).

13. Procédé de fabrication d'une baguette profilée (16) selon l'une quelconque des revendications 1 à 9, **caractérisé par le fait que** la baguette profilée (16) est extrudée, dans lequel on utilise une filière d'extrusion dont on fait varier la section transversale pour une fabrication d'un seul tenant immédiatement consécutive des tronçons (46a, 44a, 46b, 44b, 46c) différents de la deuxième zone de liaison (24) de la baguette profilée (16).

14. Procédé de fabrication d'une baguette profilée (16) selon l'une quelconque des revendications 1 à 9, **caractérisé par le fait que** l'on réalise d'abord un brin de profilé dont la deuxième zone de liaison (24) présente un profilé fermé (64) sur l'ensemble de sa longueur, et que, ensuite, on enlève du matériau du profilé fermé (64) le long d'au moins une première partie de la longueur du brin de profilé de sorte que l'on obtient dans cette première partie de la longueur du brin de profilé un profilé ouvert (50) qui permet l'introduction d'un élément de liaison (56) d'un composant (18) adjacent dans une zone de réception (54) délimitée par le profilé ouvert (50), et de sorte qu'il reste dans au moins une deuxième partie de la longueur du brin de profilé un profilé fermé (64) qui empêche l'introduction de l'élément de liaison (56) dans le profilé fermé (64).
